# EUROPEAN PATENT SPECIFICATION

(11) **EP 1 672 087 B1**
(45) Date of publication and mention of the grant of the patent: **06.02.2008**
(21) Application number: 05112380.0
(22) Date of filing: 19.12.2005
(51) Int. Cl.: C22C 24/00, C01B 3/00, H01M 4/38, H01M 4/40

(54) **Hydrogen storage materials comprising gallium**
Wasserstoffspeicher-Werkstoffe, die Gallium enthalten
Compositions de stockage d'hydrogene comprenant du gallium

(30) Priority: 17.12.2004 US 636549 P; 07.12.2005 CA 2529433
(43) Date of publication of application: 21.06.2006
(73) Proprietor: The University of New Brunswick, Fredericton, New Brunswick E3B 5A3 (CA)
(72) Inventor: McGrady, Sean, Frederiction E3B 5A3, New Brunswick (CA)
(74) Representative: Grey, Ian Michael

(56) References cited:
- ARROYO Y DE DOMPABLO M E ET AL: "First principles investigations of complex hydrides AMH4 and A3MH6 (A=Li, Na, K, M=B, Al, Ga) as hydrogen storage systems" JOURNAL OF ALLOYS AND COMPOUNDS, ELSEVIER SEQUOIA, LAUSANNE, CH, vol. 364, no. 1-2, 11 February 2004 (2004-02-11), pages 6-12, XP004481067 ISSN: 0925-8388
- T. N. DYMOVA, YU. M. DERGACHEV: "Reaction of alkali metals and hydrogen with gallium" N. S. KURNAKOV INSTITUTE INORGANIC CHEMISTRY, June 1981 (1981-06), pages 935-940, XP009062881 USSR
- WOJCIECH GROCHALA; PETER P. EDWARDS: "Thermal decomposition of the non-interstitial hydrides for the storage and production of hydrogen" CHEMICAL REVISION, vol. 104, 18 February 2004 (2004-02-18), pages 1283-1315, XP002370661 USA

## Description

This invention relates generally to hydrogen storage materials and more specifically relates to hydrogen storage materials which are liquid metal alloys in their discharged state.

Hydrogen storage materials or media (HSMs) are a class of chemical compounds containing hydrogen in a chemically or physically bound form. There is a particular current interest in HSMs for hydrogen storage applications and in particular, for hydrogen-powered vehicles for use in a 'hydrogen economy'. This use requires an on-board source of hydrogen fuel. Hydrogen storage for transportation must operate within minimum volume and weight specifications, supply enough hydrogen for sufficient distance, charge/recharge near room temperature, and provide hydrogen at rates fast enough for fuel cell locomotion of automotive vehicles. Therefore, in order to create a useful on-board source of hydrogen fuel, an efficient method of storing the hydrogen is required.

Despite optimism over the last three decades, a hydrogen economy remains a utopian vision. The US Department of Energy (DOE) Basic Science group recently summarized the fundamental scientific challenges that must be met before a hydrogen economy becomes viable. In Basic Research Needs For The Hydrogen Economy, US DOE Report, May 2003, the following design criteria were identified for a viable HSM:
(i) High hydrogen storage capacity (min 6.5 wt % H).
(ii) Low H₂ generation temperature (T_{dec} ideally around 60-120°C).
(iii) Favorable kinetics for H₂ adsorption/desorption.
(iv) Low cost.
(v) Low toxicity and low hazards.

Virtually all HSMs used in prior art technologies have been known for several decades, and none of them meet all five of the criteria listed above. For example, a number of alloys such as FeTi, Mg₂Ni and LaNi₅ satisfy criteria (2)-(5) but fail on criterion 1, containing only a few wt % hydrogen when fully loaded. Li₃BeH₇ reversibly stores 8.7 % hydrogen by weight, but is highly toxic, thereby failing on criterion (5). Materials such as LiBH₄ and NaBH₄ react rapidly with water (hydrolysis) to release large amounts of hydrogen, but this process is chemically irreversible. Many other materials satisfy criteria (1), (2), (4) and (5), but not criterion (3).

It is known from Arroyo Y De Dompablo M E et al: "First principles investigations of complex hydrides AMH4 and A3MH6 (A = Li, Na, K, M=B, AI, Ga) as hydrogen storage systems" Journal of Alloys and Compounds, Elsevier Sequoia, Lausanne, CH, vol. 364, no. 1-2, 11 February 2004 (2004-02-11), pages 6-12, XP004481067 ISSN: 0925-8388 to provide a reversible hydrogen storage material including on a liquid metal alloy that is a solid in its charged state and a liquid in its discharges state. It is also known from T.N. Dymova, Yu. M. Dergachev: "Reaction of alkali metals and hydrogen with gallium" N.S. Kurnakov Institute Inorganic Chemistry, June 1981 (1981-06), pages 935-940, XP009062881 USSR to provide the hydrogen storage materials Li₃GaH₆ and Na₃GaH₆.

A reversible hydrogen storage material according to the present invention is characterised in that the hydrogen storage material is NaMgGaH₆. A method of making a hydrogen storage material comprising a metal alloy that in its discharged state is in a liquid phase, including the step of hydrogenating a ternary alloy is also claimed.

According to the present invention, the ternary alloy is NaMgGa and the material is NaMgGaH₆.

The present invention relates to a hydrogen storage material that is a solid in its charged state, but a liquid when discharged. The liquid nature of the discharged material overcomes some of the problems described above, and facilitates the uptake of hydrogen to return the material to its fully hydrogenated state.

For the HSMS of the invention, the lower hydrogen content may be compensated by superior hydrogenation and dehydrogenation characteristics.

NaMgGaH₆ may be prepared using the following two methods. The first of these involves direct synthesis under a hydrogen atmosphere, as is the case for the aluminum analogue Na₃A1H₆ as set out in Eq.1.

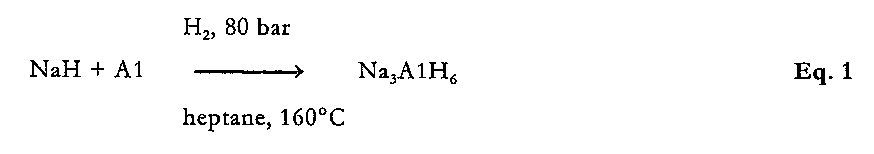

This method is applicable to both ternary produces such as Li₃GaH₆ and quaternary ones such as NaMgH₆, which do not form part of the invention.

Alternatively, a two-step method may be used. In the first step a crown ether complex of [GaH₆]³⁻ is prepared; this cation is then exchanged for a naked alkali metal counter-ion in the second step, as exemplified in Eqs 2-5, using a large anion to sequester the complex crown ether cation.

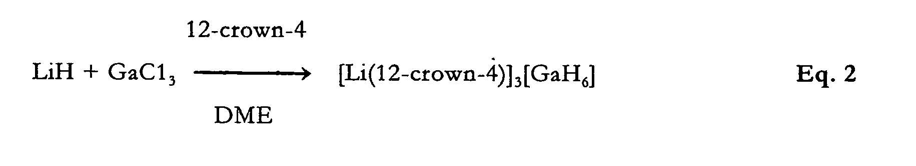

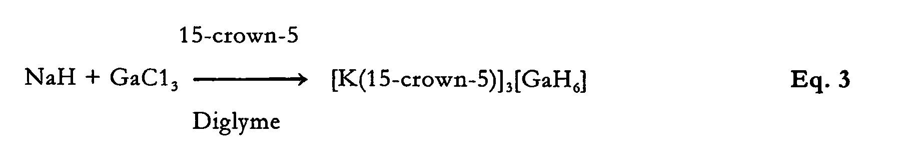

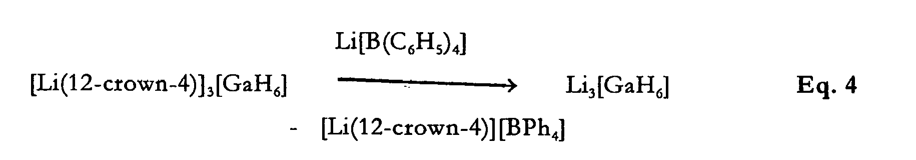

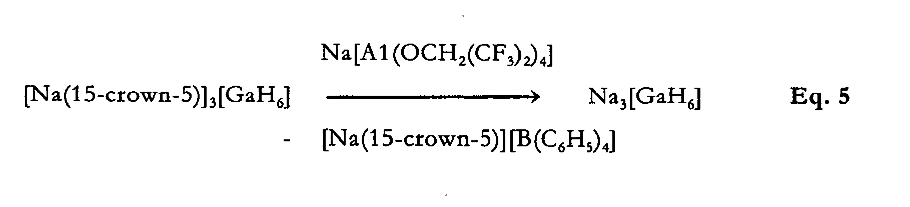

It will be appreciated to those skilled in the art that materials, such as the tetrahydride LiGaH₄, having too fast a decomposition at ambient temperatures [1] are too unstable for use as HSMs according to the invention.

### References

[1] Grochala, W.; Edwards, P.P. Chem. Rev. 2004, 104, 1283.

## Claims

1. A reversible hydrogen storage material comprising a metal alloy that is a solid in its charged state and a liquid in its discharged state, **characterised in that** the hydrogen storage material is NaMgGaH₆.

2. A hydrogen storage material according to claim 1, wherein the hydrogen storage material in its discharged state is a liquid at room temperature.

3. A method of making a hydrogen storage material comprising a metal alloy that in its discharged state is in a liquid phase, comprising the step of hydrogenating a ternary alloy **characterised in that** the ternary alloy is NaMgGa and the material is NaMgGaH_{6'}

4. A method of making a hydrogen storage material according to claim 3 wherein the material in its charged state is in a solid phase.

## Patentansprüche

1. Reversibles Wasserstoffspeichermaterial, das eine Metalllegierung umfasst, die in ihrem beladenen Zustand ein Feststoff ist und in ihrem entladenen Zustand eine Flüssigkeit ist, **dadurch gekennzeichnet, dass** das Wasserstoffspeichermaterial NaMgGaH₆ ist.

2. Wasserstoffspeichermaterial nach Anspruch 1, worin das Wasserstoffspeichermaterial in seinem entladenen Zustand bei Raumtemperatur eine Flüssigkeit ist.

3. Verfahren zur Herstellung eines Wasserstoffspeichermaterials, das eine Metalllegierung umfasst, die in ihrem entladenen Zustand in einer flüssigen Phase ist, das den Schritt der Hydrierung einer ternären Legierung umfasst, **dadurch gekennzeichnet, dass** die ternäre Legierung NaMgGa ist und das Material NaMgGaH₆ ist.

4. Verfahren zur Herstellung eines Wasserstoffspeichermaterials nach Anspruch 3, worin das Material in seinem beladenen Zustand in einer festen Phase ist.

## Revendications

1. Matériau de stockage d'hydrogène réversible comprenant un alliage métallique qui est un solide dans son état chargé et un liquide dans son état déchargé, **caractérisé en ce que** le matériau de stockage d'hydrogène est NaMgGaH₆.

2. Matériau de stockage d'hydrogène selon la revendication 1, dans lequel le matériau de stockage d'hydrogène dans son état déchargé est un liquide à température ambiante.

3. Procédé de fabrication d'un matériau de stockage d'hydrogène comprenant un alliage métallique qui dans son état déchargé est dans une phase liquide, comprenant l'étape consistant à hydrogéner un alliage ternaire, **caractérisé en ce que** l'alliage ternaire est NaMgGa et le matériau est NaMgGaH₆.

4. Procédé de fabrication d'un matériau de stockage d'hydrogène selon la revendication 3, dans lequel le matériau dans son état chargé est dans une phase solide.
